# EUROPÄISCHE PATENTSCHRIFT

(11) **EP 4 377 072 B1**
(45) Veröffentlichungstag und Bekanntmachung des Hinweises auf die Patenterteilung: **12.03.2025**
(21) Anmeldenummer: 22764319.4
(22) Anmeldetag: 03.08.2022
(51) Int. Cl.: B29C 64/35, B08B 3/00, B22F 10/00, B33Y 40/00, B08B 3/02

(54) **SPÜLSTATION UND VERFAHREN ZUM SPÜLEN**
RINSING STATION AND RINSING METHOD
STATION DE PURGE ET PROCÉDÉ DE PURGE

(30) Priorität: 04.08.2021 DE 102021120325
(43) Veröffentlichungstag der Anmeldung: 05.06.2024
(73) Patentinhaber: Arburg GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)
(86) Internationale Anmeldenummer: PCT/EP2022/071885
(87) Internationale Veröffentlichungsnummer: WO 2023/012249

(56) Entgegenhaltungen:
- WO-A1-2020/012468
- CN-U- 209 208 092
- US-A1- 2020 061 920

## Beschreibung

Die Erfindung betrifft eine Spülstation mit mindestens einer bewegbaren Austragseinheit und ein Verfahren zum Spülen mindestens einer bewegbaren Austragseinheit unter Verwendung der Spülstation für eine Vorrichtung zur Herstellung eines dreidimensionalen Gegenstandes aus verfestigbarem Material in einem Bauraum, das in einer Arbeitsstellung aus einer Austragsdüse der Austragseinheit austragbar ist, wobei fluides verfestigbares Material in einer Spülstellung aus der Austragseinheit in einem Spülvorgang austragbar ist, entsprechend dem Oberbegriff des Anspruchs 1 Aus der EP 1 886 793 A1, WO 2012/171647 A1 und WO 2013/017278 A1 sind Vorrichtungen und Verfahren bekannt, mit denen in einem Bauraum dreidimensionale Gegenstände aus verfestigbarem Material hergestellt werden. Dabei werden Materialien, die unter Einwirkung erhöhter Temperatur entweder im Ausgangszustand bereits als Fluid vorliegen oder verflüssigt werden können, durch Austragen von Tropfen mittels mindestens einer Austragseinheit mit einer Austragsdüse auf einem Objektträger hergestellt, wobei entweder die Austragseinheit und / oder der Objektträger bewegbar ist und dadurch den sequentiellen und additiven Auftrag von fluidem Material auf dem Objektträger erlaubt. Das Material wird anschließend nach dessen Auftrag auf dem Objektträger durch Absenkung der Temperatur verfestigt und bildet auf diese Weise schichtweise den dreidimensionalen Gegenstand.

Vergleichbare Vorrichtungen sind aus den Dokumenten US 2017/0050388 A1, US 2019/0118258 A1 oder der US 2015/0343688 A1 bekannt.

In der US 2020/061920 A1 sind Hilfsmaterialhandhabungseinheiten für die additive Fertigung (AM), Verfahren zum Handhaben von Hilfsmaterial eines AM-Systems und aktive Druckkopfreinigungsvorrichtungen offenbart. Eine Hilfsmaterialhandhabungseinheit (AMHU) umfasst einen Materialverdränger mit mindestens einer Eintrittsöffnung, durch die Hilfsmaterial von einem AM-System aufgenommen wird, wobei der Materialverdränger das Hilfsmaterial von der zumindest einen Eintrittsöffnung weg verdrängt. Ein Verfahren zum Handhaben von Hilfsmaterial eines AM-Systems umfasst das Empfangen von Hilfsmaterial von dem AM-System in einem Materialverdränger mit mindestens einer Eintrittsöffnung, wobei der Materialverdränger das Hilfsmaterials weg von der mindestens einen Eintrittsöffnung verdrängt. Das verdrängte Hilfsmaterial kann in einem Auffangbehälter gesammelt werden. Eine aktive Druckkopfreinigungsvorrichtung reinigt aktiv Hilfsmaterial von einem AM-Druckkopf und führt das Hilfsmaterial einer AMHU zu. Ein AM-Verfahren, das mehrere Druckköpfe verwendet, umfasst das Aufbringen von Material mit einem ersten Druckkopf, um ein Teil herzustellen, wobei während des Aufbringens von Material mit dem ersten Druckkopf Hilfsmaterial mit einem zweiten Druckkopf abgeschieden wird. Das abgeschiedene Hilfsmaterial kann von einem Materialverdränger mit mindestens einer Eintrittsöffnung aufgenommen und verdrängt werden.

Bei den bekannten Vorrichtungen bzw. Verfahren ist jedoch insbesondere nachteilig, dass bei längeren Pausen während des Herstellungsprozesses die verwendeten Materialien thermisch geschädigt sein können. Um Material nicht im Verlauf des Herstellungsprozesses im Gegenstand einzubetten und somit die visuellen als auch materialspezifischen Eigenschaften eventuell negativ zu beeinflussen, werden in der heute gängigen Praxis zwei Methoden angewendet, um Material oder auch ggf. degradiertes Material aus der Austragseinheit, insbesondere deren Austragsdüse, auszutragen. Zum einen kann Material in einen Abfallbereich im oder außerhalb des Bauraums aus der Austragseinheit ausgespült werden, bis wieder frisch aufgeschmolzenes Material an der Austragsdüse zur Verfügung steht. Zum anderen kann Material in einen Opfergegenstand eingebaut werden, um die Verweilzeit des kritischen Materials in der Austragseinheit nicht zu überschreiten. Der Einbau vom Material im Opfergegenstand wird zeitlich so getaktet, dass möglichst kein degradiertes Material entsteht, indem das Material dadurch nicht zu lange einer hohen Temperatur ausgesetzt wird.

Beide Lösungen werden in marktüblichen Vorrichtungen bzw. Verfahren verwendet, weisen jedoch den Nachteil auf, dass nur Material ausgetragen und nicht gleichzeitig einer eventuellen Verschmutzung systemkritischer Komponenten, wie z. B. der Austragsdüse, entgegengewirkt wird, wodurch sich die Lebensdauer dieser Komponenten verkürzt. Materialreste können von der Austragsdüse zum Bauteil gelangen, was wiederum dessen materialspezifischen und visuellen Eigenschaften negativ beeinflussen kann. Zumindest bei der Methode des Opfergegenstands ist außerdem ein erhöhter Materialverbrauch gegeben, der eine Erhöhung der Bauzeit bewirkt, wodurch auch die Produktionskosten steigen.

Der Erfindung liegt daher die Aufgabe zugrunde, eine Spülstation mit mindestens einer bewegbaren Austragseinheit und ein Verfahren zum Spülen mindestens einer bewegbaren Austragseinheit unter Verwendung der Spülstation für eine Vorrichtung zur Herstellung eines dreidimensionalen Gegenstandes aus verfestigbarem Material in einem Bauraum anzugeben, durch die der Herstellungsprozess optimiert und bei denen stets Material am Ausgang der Austragseinheit bereitgestellt wird, bei gleichzeitiger Erhöhung der Lebensdauer systemkritischer Komponenten.

Diese Aufgabe wird durch eine Spülstation mit den Merkmalen des Anspruches 1 und durch ein Verfahren mit den Merkmalen des Anspruches 11 gelöst.

Die erfindungsgemäße Spülstation bzw. das Verfahren weisen die Vorteile auf, dass die Austragsdüse der Austragseinheit während des gesamten Herstellungsprozesses des Gegenstands bzw. der Gegenstände in einem für die Herstellung gut geeigneten Zustand gehalten wird. So ist ein beliebiger Materialwechsel jederzeit während der Produktion möglich, wodurch Verzögerungen in der Herstellung vermieden werden. Zudem kann auch zumindest teilweise degradiertes Material bedarfsweise entsorgt werden, um eine unerwünschte Materialqualität und damit auch qualitative Störungen des Gegenstands bzw. der Gegenstände zu vermeiden bzw. zu unterbinden. Gleichzeitig kann die Qualität des zu verarbeitenden Materials gesteigert werden. Grundsätzlich ist aber jederzeit ein Materialwechsel durch Spülen der Austragseinheit möglich.

Bedarfsweise kann das ausgetragene Material hinsichtlich seiner Temperatur so beeinflusst werden, dass es z.B. mit einer vorbestimmten Temperatur ausgetragen wird, um das Volumen zu optimieren bzw. vorzugsweise zu reduzieren, den das ausgetragene bzw. zu entsorgende Material einnimmt. Dies hat aus Umweltgesichtspunkten den Vorteil einer volumenmäßig verringerten zu entsorgenden Masse.

Für die Produktivität und Kosteneffizienz des Gesamtsystems ist es vorteilhaft, dass die Anlage der Austragsdüse mit der Öffnung des Verschlussbauteils und die Verbindung des Verschlussbauteils mit dem Entsorgungsbehälter ausgebildet sind, einen Zustand im Entsorgungsbehälter zu erzeugen, der ein Volumen des ausgetragenen fluiden verfestigbaren Materials mindert. Dieser Zustand ist thermisch optimiert oder durch einen Druck erreicht.

Vorteilhaft weisen die Austragsdüse und die Öffnung des Verschlussbauteils eine aufeinander abgestimmte Geometrie auf, die ausgebildet ist, Anhaftungen von ausgetragenem Material an der Austragsdüse zu reduzieren und eine weitestgehend fadenfreie Trennung der Austragsdüse von dem Verschlussbauteil zu ermöglichen. Dabei besteht die aufeinander abgestimmte Geometrie der Austragsdüse und der Öffnung des Verschlussbauteils aus geeigneten geometrischen Formen, vorteilhaft aus konischen Formen.

Weitere Verbesserungen ergeben sich aus den Merkmalen der Unteransprüche.

Bei vorzugsweiser Verwendung mehrerer Austragseinheiten ist die Steuerung ausgebildet, vorteilhaft gleichzeitig die Herstellung des dreidimensionalen Gegenstandes mittels mindestens einer Austrageinheit im Bauraum und das Austragen des fluiden verfestigbaren Materials, das ggf. auch teilweise bereits degradiert sein kann, mittels mindestens einer Austragseinheit in den Entsorgungsbehälter zu ermöglichen. Dadurch lassen sich vorteilhaft die Bauzeit der Gegenstände als auch die Verweilzeit des Materials reduzieren.

Eine erste für die Lebensdauer des Gesamtsystems und für die materialspezifischen Eigenschaften des im Bauprozess ausgetragenen Materials vorteilhafte Ausgestaltung der Spülstation sieht vor, dass bei der Trennung der Austragsdüse von der Öffnung des Verschlussbauteils des Entsorgungsbehälters gleichzeitig ein Abtrennen von an der Austragsdüse noch anhaftendem Material am Entsorgungsbehälter erfolgt. Dies trägt vorteilhaft zur Qualität des im Gegenstand befindlichen Materials und damit zur Qualität der hergestellten Gegenstände bei.

Eine für die Produktivität des Gesamtsystems vorteilhafte Ausgestaltung der Spülstation zur Verkürzung der Herstellungszeit sieht vor, dass der erste Bewegungsmechanismus ausgebildet ist zur Entnahme der Austragseinheit aus dem Bauraum und nach dem Austragen des fluiden verfestigbaren Materials außerhalb des Bauraums zur Einbringung der Austragseinheit in den Bauraum.

Eine für die Produktivität und Kosteneffizienz des Gesamtsystems vorteilhafte Ausgestaltung der Spülstation sieht vor, dass das Verschlussbauteil mehrere Öffnungen aufweist und dazu ausgebildet ist, einen mehrfachen Austrag von fluidem verfestigbarem Material in den Entsorgungsbehälter zu ermöglichen. Dies verringert zusätzlich vorteilhaft die Bauzeiten der zu fertigenden Gegenstände.

Weitere für die Produktivität und Kosteneffizienz des Gesamtsystems vorteilhafte Ausgestaltungen der Spülstation sehen vor, dass mehrere Entsorgungsbehälter in einem in die Vorrichtung integrierbarem Behältermagazin bevorratet sind. Mittels einer in die Vorrichtung integrierbaren Vereinzelungseinheit sind die Entsorgungsbehälter vereinzelbar und an eine Entsorgungsbehälteraufnahme übergebbar, die mit einem an einem in die Vorrichtung integrierbaren Schwenk- und Linearbewegungsmechanismus angeordneten Tragarm verbunden ist, wobei der zweite Bewegungsmechanismus den Schwenk- und Linearbewegungsmechanismus umfasst. Dadurch lässt sich die Entsorgung vorteilhaft zeitlich als auch mengenmäßig optimieren.

Eine zusätzliche für die Funktion sowie Produktivität und Kosteneffizienz des Gesamtsystems vorteilhafte Ausgestaltung der Spülstation sieht vor, dass das Verschlussbauteil in die Entsorgungsbehälteraufnahme integriert ist.

Eine für die Funktion sowie Produktivität und Kosteneffizienz des Gesamtsystems vorteilhafte Ausgestaltung der Spülstation sieht vorzugsweise vor, dass der erste Bewegungsmechanismus einen Abhebemechanismus umfasst, der einen Freiraum unter der Austragsdüse bildet, der es erlaubt, mit dem Schwenk- und Linearbewegungsmechanismus den Entsorgungsbehälter in verschiedenen, der Anzahl der Öffnungen des Verschlussbauteils entsprechenden, Stellungen unter der Austragsdüse zu platzieren.

Eine für die Bedienung und Wartbarkeit des Gesamtsystems vorteilhafte Ausgestaltung der Spülstation sieht vorzugsweise vor, dass der Schwenk- und Linearbewegungsmechanismus an einem schwenkbaren Verkleidungsdeckel der Vorrichtung anordenbar ist.

Eine zusätzliche für die Produktivität und Kosteneffizienz des Gesamtsystems vorteilhafte Ausgestaltung der Spülstation sieht vorzugsweise vor, dass vollständig befüllte Entsorgungsbehälter mittels des Schwenk- und Linearbewegungsmechanismus zu einer mit der Vorrichtung in Verbindung stehenden Entsorgungseinrichtung transportierbar sind.

Eine für die Lebensdauer des Gesamtsystems und für die materialspezifischen Eigenschaften des im Bauprozess ausgetragenen Materials vorteilhafte Ausgestaltung der Spülstation und des Verfahrens sieht vor, dass beim Trennen der Austragsdüse der Austragseinheit von der Öffnung des Verschlussbauteils des Entsorgungsbehälters gleichzeitig ein verbliebener Materialaustrag an der Austragsdüse abgestreift wird.

Eine für die Produktivität und Kosteneffizienz des Gesamtsystems vorteilhafte Ausgestaltung des Verfahrens sieht vor, dass bei Verwendung eines Verschlussbauteils mit mehreren Öffnungen ein mehrfacher Austrag von fluidem verfestigbarem Material in den Entsorgungsbehälter durchgeführt wird.

Verfahrensgemäß kann bei Verwendung mehrerer Austragseinheiten vorteilhaft gleichzeitig die Herstellung des dreidimensionalen Gegenstandes mittels mindestens einer Austrageinheit im Bauraum und das Austragen des fluiden verfestigbaren Materials mittels mindestens einer Austragseinheit in der Spülstellung erfolgen.

Die Erfindung wird nun anhand von Ausführungsbeispielen näher erläutert. Es zeigen:
- Fig. 1: eine perspektivische Ansicht einer Vorrichtung zur Herstellung eines dreidimensionalen Gegenstandes aus verfestigbarem Material in einem Bauraum mit drei Austragseinheiten und einer Spülstation,
- Fig. 2: eine perspektivische Detailansicht eines Ausschnitts A der Fig. 1,
- Fig. 3: eine perspektivische Detailansicht der Vorrichtung aus Fig. 1 mit drei Austragseinheiten und einem Schwenk- und Linearbewegungsmechanismus,
- Fig. 4: eine perspektivische Detailansicht der Vorrichtung aus Fig. 1 mit einem Schwenk- und Linearbewegungsmechanismus, einem Tragarm mit Entsorgungsbehälteraufnahme und einem Behältermagazin,
- Fig. 5: eine perspektivische Detailansicht eines Ausschnitts B der Fig. 4 mit dem Tragarm mit Entsorgungsbehälteraufnahme und damit verbundenem Verschlussbauteil,
- Fig. 6: eine perspektivische Detailansicht des Ausschnitts B der Fig. 4 mit dem Tragarm mit Entsorgungsbehälteraufnahme sowie dem damit verbundenen Verschlussbauteil, Entsorgungsbehälter und Austragseinheit mit Austragsdüse,
- Fig. 7: eine perspektivische Detail- und Schnittansicht des Ausschnitts B der Fig. 4 mit dem Tragarm mit Entsorgungsbehälteraufnahme sowie dem damit verbundenen Verschlussbauteil, Entsorgungsbehälter und Austragsdüse.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

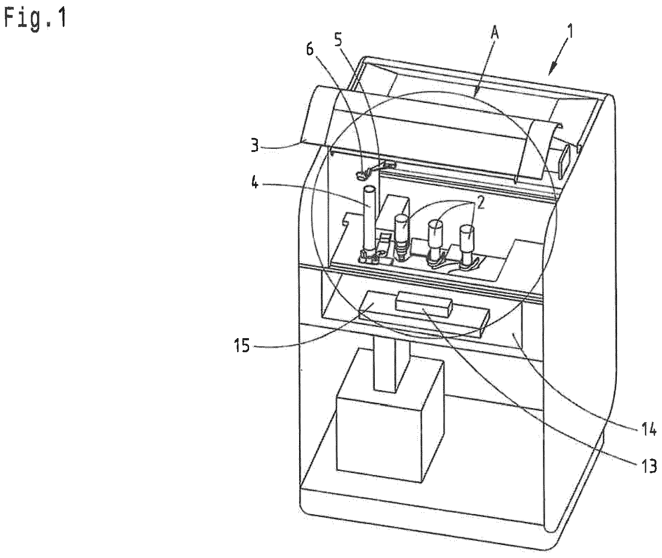

Fig. 1 zeigt eine Vorrichtung 1 zur Herstellung eines dreidimensionalen Gegenstandes 13 aus verfestigbarem Material in einem Bauraum 14. Dabei werden Materialien, die unter Einwirkung erhöhter Temperatur entweder im Ausgangszustand bereits als Fluid vorliegen oder verflüssigt werden können, durch Austragen von Tropfen mittels mindestens einer Austragseinheit 2 mit einer Austragsdüse 12 auf einem unterhalb der Austragseinheit 2 angeordneten Objektträger 15 hergestellt, wobei entweder die Austragseinheit 2 und / oder der Objektträger 15 bewegbar ist und dadurch den sequentiellen und additiven Auftrag von fluidem Material auf dem Objektträger 15 erlaubt. Das Material wird anschließend nach dessen Auftrag auf dem Objektträger 15 z.B. durch Absenkung der Temperatur verfestigt und bildet auf dieses Weise schichtweise den dreidimensionalen Gegenstand 13.

Die Vorrichtung 1 kann auch in der Lage sein, neben dem tropfenweisen Austrag des Materials, dieses auch in Strangform aus der Austragseinheit 2 auszugeben.

Die in Fig. 1 abgebildete Vorrichtung 1 weist drei Austragseinheiten 2 auf, die sich jeweils in einer Arbeitsstellung oder Spülstellung befinden können und mit denen in den Arbeitsstellungen entweder ein wahlweiser Austrag von Material durch eine Austragseinheit 2 oder ein gleichzeitiger Austrag durch mehrere Austragseinheiten 2 nach unten in den nicht näher bezeichneten oder dargestellten Bauraum 14 und auf einen oder mehrere darin befindliche nicht näher bezeichnete oder dargestellte Objektträger 15 ermöglichbar ist. Bedarfsweise kann auch ein Stützmaterial durch eine der Austragseinheiten 2 ausgetragen werden.

Dargestellt sind auch Teile einer Spülstation, wie z. B. ein Tragarm 5 und ein Entsorgungsbehälter 6, die z. B. an einem schwenkbaren Verkleidungsdeckel 3 der Vorrichtung 1 angeordnet sein können und dazu dienen, fluides verfestigbares Material aus einer Austragseinheit 2, die sich in einer Spülstellung befindet, in einem Spülvorgang in Entsorgungsbehälter 6 auszutragen, die wiederum vor deren Benutzung in einem Behältermagazin 4 zwischengelagert werden können. Das fluide verfestigbare Material kann durch entsprechende Verweilzeiten oder äußere Einflüsse wie einen bestimmten Temperaturverlauf im Bauraum zumindest teilweise degradiert sein, muss es aber nicht. Grundsätzlich genügt z.B. auch lediglich ein Wunsch nach einem Materialwechsel, um ggf. Material zu entsorgen.

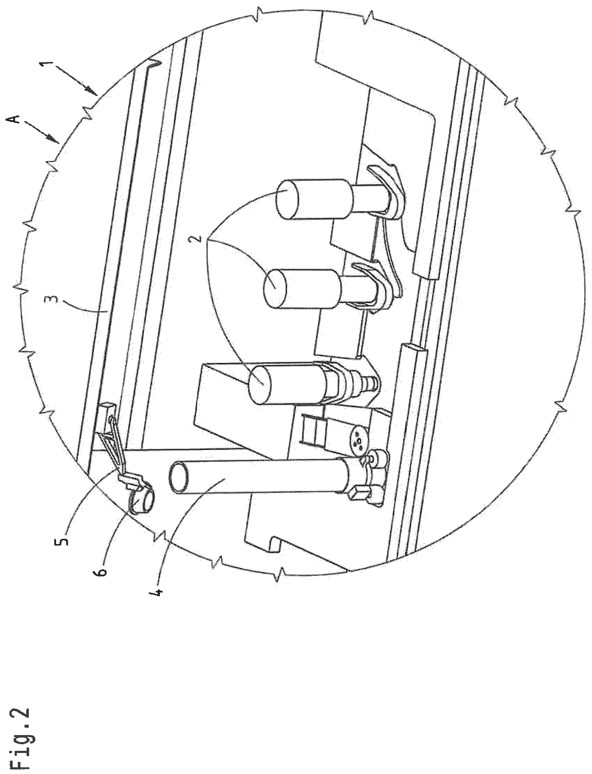

Fig. 2 zeigt eine perspektivische Detailansicht eines Ausschnitts A der Fig. 1. Darin zu sehen ist neben den drei Austragseinheiten 2, das Behältermagazin 4 für die Entsorgungsbehälter 6, in die fluides verfestigbares Material austragbar ist und der schwenkbare Verkleidungsdeckel 3, an dem die bereits oben genannten Teile der Spülstation angeordnet sein können.

Bei den abgebildeten Teilen handelt es sich um einen Tragarm 5, der an einem Schwenk- und Linearbewegungsmechanismus 8 befestigbar ist, und einen Entsorgungsbehälter 6 für ausgetragenes Material, der mit dem Tragarm 5 verbindbar ist. Eine Anordnung des Schwenk- und Linearbewegungsmechanismus 8 mit dem Tragarm 5 an dem schwenkbaren Verkleidungsdeckel 3 der Vorrichtung 1 weist den Vorteil auf, dass die komplette Mimik z. B. im Servicefall nach oben geschwenkt werden kann, um einen optimalen Zugang des Servicepersonals z. B. zu den Austragseinheiten 2 zu gewähren. Eine andere Anordnung innerhalb der Vorrichtung 1 ist ebenfalls möglich.

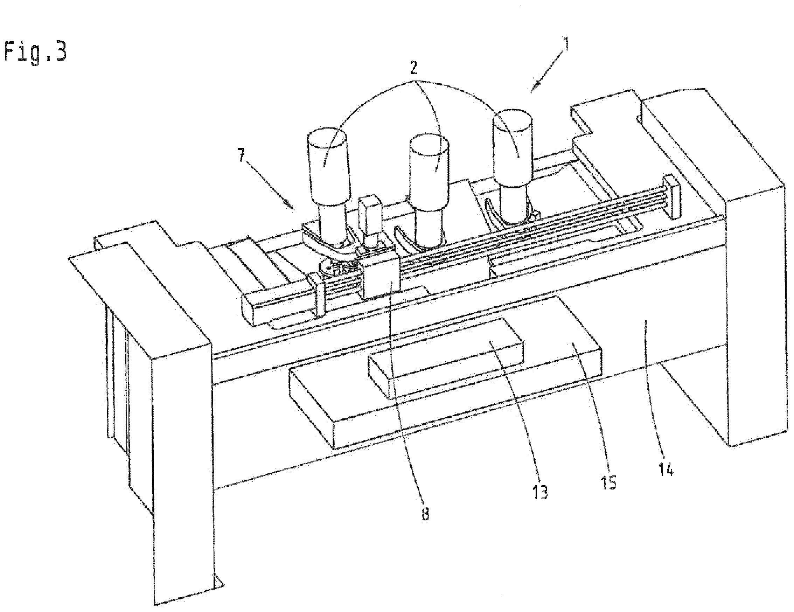

In Fig. 3 ist eine perspektivische frontseitige Detailansicht der Vorrichtung aus Fig. 1 dargestellt mit drei Austragseinheiten 2 sowie dem Schwenk- und Linearbewegungsmechanismus 8, der ohne den schwenkbaren Verkleidungsdeckel 3 dargestellt ist, an dem er anordenbar ist. Die Austragseinheiten 2 können in einem Abhebemechanismus 7 gelagert sein, der es erlaubt, die Austragseinheiten 2 aus ihrer Arbeitsstellung im Bauraum 14 in die Spülstellung abzuheben bzw. herauszubewegen, sofern eine Überführung aus dem Bauraum 14 erwünscht ist. Dies erleichtert die Platzierung eines Entsorgungsbehälters 6 unter der Austragseinheit 2, insbesondere unter deren Austragsdüse 12, wobei der Entsorgungsbehälter 6 mittels des Tragarms 5, an dem er befestigbar ist, und mittels des an dem schwenkbaren Verkleidungsdeckel 3 der Vorrichtung 1 anordenbaren Schwenk- und Linearbewegungsmechanismus 8 unter die in der Spülstellung befindlichen Austragseinheit 2 platziert werden kann.

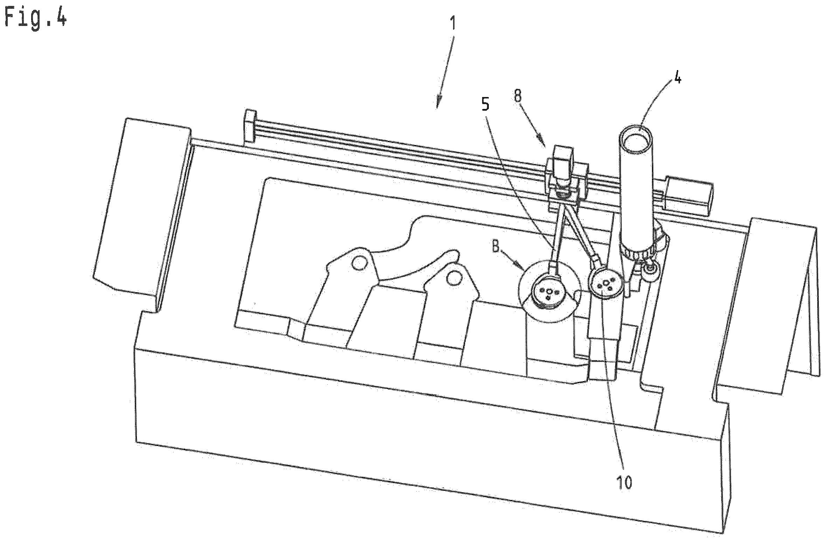

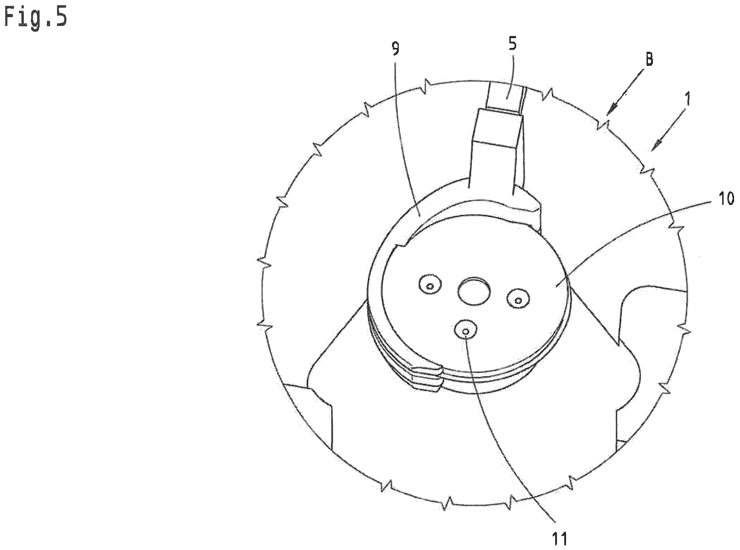

Fig. 4 zeigt eine weitere perspektivische rückseitige Detailansicht der Vorrichtung aus Fig. 1 ohne die Austragseinheiten 2 mit dem Schwenk- und Linearbewegungsmechanismus 8 und dem daran angeordneten Tragarm 5. Das andere Ende des Tragarms 5 ist mit einem Verschlussbauteil 10 verbindbar, das den hier nicht dargestellten Entsorgungsbehälter 6 abdeckt. Die Verbindung des Verschlussbauteils 10 mit dem Entsorgungsbehälter 6 kann z. B. mittels einer Entsorgungsbehälteraufnahme 9 (Fig. 5) erfolgen, die direkt mit dem Ende des Tragarms 5 verbindbar ist und das Verschlussbauteil 10 und den damit verbundenen Entsorgungsbehälter 6 hält und ggf. miteinander verbindet. In letzterem Fall kann die Verbindung z. B. mittels Verpressens der beiden Bauteile erfolgen. Es kann aber auch sein, dass die Verbindung des Verschlussbauteils 10 und des Entsorgungsbehälters 6 z. B. durch einen Schraub- oder Bajonettverschluss oder durch eine kraftschlüssige Verbindung erfolgt, wobei die verbundenen Teile nur von der Entsorgungsbehälteraufnahme 9 gehalten werden. Ebenso kann das Verschlussbauteil 10 in die Entsorgungsbehälteraufnahme 9 integriert sein.

Schematisch dargestellt ist auch die Aufnahme des Entsorgungsbehälters 6 aus dem Behältermagazin 4, das eine nicht näher dargestellte Vereinzelungseinheit zur Vereinzelung und Übergabe der Entsorgungsbehälter 6 aus dem Behältermagazin 4 an den Tragarm 5 aufweist, der den Entsorgungsbehälter 6 von der übergebenden Vereinzelungseinheit aufnimmt und direkt unter der nicht dargestellten Austragseinheit 2 platziert.

In Fig. 5 ist eine perspektivische Detailansicht eines Ausschnitts B der Fig. 4 mit dem Tragarm 5 mit damit verbundener Entsorgungsbehälteraufnahme 9 und damit verbundenem Verschlussbauteil 10 dargestellt. Das Verschlussbauteil 10 kann, wie dargestellt, drei Öffnungen 11 aufweisen, die einen mehrfachen Austrag von z.B. zumindest teilweise degradiertem fluidem verfestigbarem Material aus der Austragseinheit 2 ermöglichen. Grundsätzlich können aber auch mehr oder weniger als drei Öffnungen 11 vorgesehen sein. Mittels des mehrfachen Austrags können die Entsorgungsbehälter 6 effizient ausgenutzt werden.

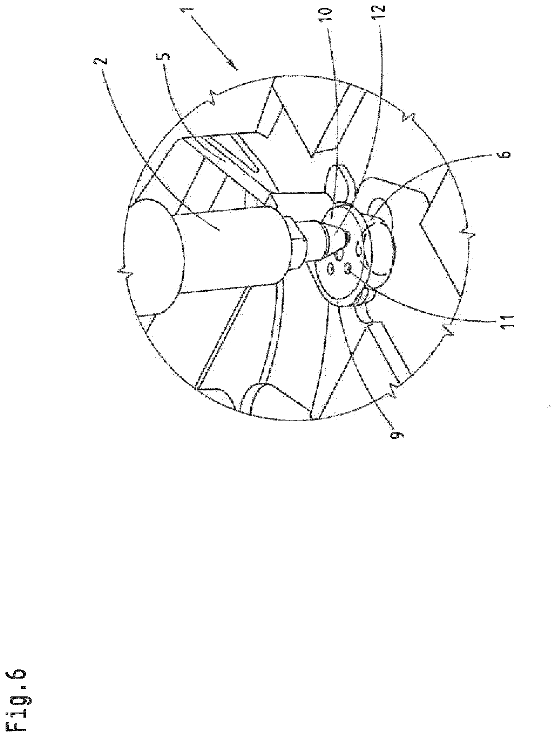

Fig. 6, eine weitere perspektivische Detailansicht des Ausschnitts B der Fig. 4, zeigt weitere Details der Spülstation. Gezeigt ist darin der Tragarm 5 mit Entsorgungsbehälteraufnahme 9 sowie den damit verbundenen weiteren Teilen der Spülstation: dem Verschlussbauteil 10, dem Entsorgungsbehälter 6, der Austragseinheit 2 und deren Austragsdüse 12, wobei eine Anlage der Austragsdüse 12 der Austragseinheit 2 an der Öffnung 11 des Verschlussbauteils 10 und dem damit verbundenen Entsorgungsbehälter 6 hergestellt ist.

Weiterhin dargestellt sind die drei Öffnungen 11 des Verschlussbauteils 10, wobei der Schwenk- und Linearbewegungsmechanismus 8 es erlaubt, jede der Öffnungen 11 des Verschlussbauteils 10 unter der Austragsdüse 12 zu platzieren. Nach dem Austragen des Materials in den Entsorgungsbehälter 6 erfolgt die Trennung der Austragsdüse 12 von der Öffnung 11 des Verschlussbauteils. Vorteilhafterweise kann dabei gleichzeitig ein verbliebener Materialaustrag von der Austragsdüse 12 abgestreift und deren Funktionsfähigkeit dadurch zusätzlich verbessert werden.

Da das Austragen des fluidem verfestigbarem Material z.B. mit einer vorbestimmten Temperatur des Materials erfolgt, entsteht durch die Verbindung von Austragsdüse 12, Verschlussbauteil 10 und Entsorgungsbehälter 6 im Entsorgungsbehälter 6 ein thermisch optimierter Zustand, der zu einer Volumenminimierung des ausgetragenen Materials führt. Solch ein Zustand kann aber auch auf andere Art und Weise, z.B. durch Druck oder chemische Zusätze erreicht werden. Dadurch werden die normalerweise beim Austrag entstehenden großvolumigen Fadengewölle zu einem minimalen Pfropf aufgeschmolzen, wodurch es möglich wird, einen mehrfachen Austrag mittels der mehreren Öffnungen 11 des Verschlussbauteils 10 durchzuführen, und wodurch bedarfsweise eine effiziente und kostengünstige mehrfache Nutzung der Entsorgungsbehälter gewährleistet ist.

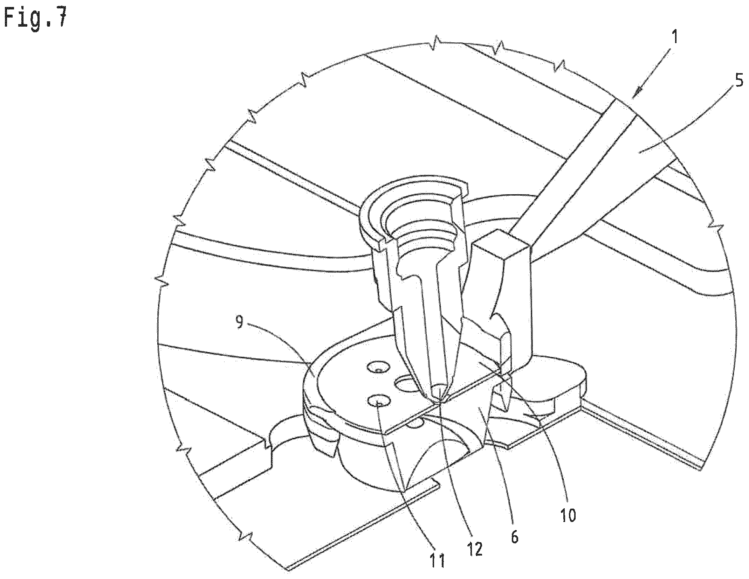

Fig. 7 ist eine weitere perspektivische, teilweise geschnittene Detail- und Schnittansicht analog zum Ausschnitt B der Fig. 4 mit dem Tragarm 5 mit Entsorgungsbehälteraufnahme 9 sowie dem damit verbundenen Verschlussbauteil 10, Entsorgungsbehälter 6 und Austragsdüse 12, wobei die Austragseinheit 2 nicht dargestellt ist.

Gut erkennbar in dieser Darstellung der Spülstation ist die besondere, aufeinander abgestimmte Geometrie der Austragsdüse 12 und der Öffnungen 11 des Verschlussbauteils 10, die zusätzlich dazu beiträgt, Anhaftungen an der Austragsdüse zu reduzieren, und damit eine weitestgehend fadenfreie Trennung der Austragsdüse 12 von der Öffnung 11 des Verschlussbauteils 10 ermöglicht. Im dargestellten Fall ist dies jeweils eine konische Form. Es kann jedoch jede andere aufeinander abgestimmte geometrische Form sein, die dazu geeignet ist, Anhaftungen von ausgetragenem Material an der Austragsdüse 12 zu reduzieren, und damit eine weitestgehend fadenfreie Trennung der Austragsdüse von der Öffnung 11 des Verschlussbauteils 10 ermöglicht. Dadurch werden zusätzliche Reinigungsabläufe zur Reinigung der Austragsdüse 12 vermieden, wodurch die Effizienz der Vorrichtung 1 verbessert wird.

Grundsätzlich kann gleichzeitig mit der Trennung der Austragsdüse 12 von der Öffnung 11 des Verschlussbauteils 10, insbesondere beim Zusammenwirken dieser Bauteile, auch ein Abtrennen von an der Austragsdüse noch anhaftendem Material am Entsorgungsbehälter 6 erfolgen. Überschüssiges oder anhaftendes, insbesondere nicht mehr benötigtes oder z.B. degradiertes Material kann so von der Austragsdüse 12 an den Entsorgungsbehälter 6 übergeben werden,
Vorteilhafterweise kann die Spülstation dazu verwendet werden, zeitparallel zur Herstellung des dreidimensionalen Gegenstands 13 mittels mindestens einer Austragseinheit 2, die sich im Bauraum 14 und damit im Herstellungsprozess befindet, mindestens eine Austragseinheit 2, insbesondere deren Austragsdüse 12, zu reinigen, die sich in der Spülstellung und ggf. außerhalb des Bauraums 14 und damit nicht im Herstellungsprozess befindet. Dies verkürzt zusätzlich die Herstellung der dreidimensionalen Gegenstände.

Die mit Austragsmaterial vollständig befüllten Entsorgungsbehälter 6 können mittels des Schwenk- und Linearbewegungsmechanismus 8 zu einer mit der Vorrichtung 1 in Verbindung stehenden Entsorgungseinrichtung transportiert und dort entsorgt werden. Die Entsorgung der Entsorgungsbehälter 6 kann über eine Führungsbahn, die mit der Vorrichtung 1 in Verbindung steht, zu einem außenliegenden Sammelpunkt erfolgen, der wiederum prozessunabhängig entleert werden kann.

Ein Verfahren zum Spülen mindestens einer bewegbaren Austragseinheit 2 für eine Vorrichtung 1 zur Herstellung eines dreidimensionalen Gegenstandes 13 aus verfestigbarem Material in einem Bauraum 14 ist in Anspruch 11 definiert.

Werden ggf. mehrere Austragseinheiten 2 dabei gleichzeitig verwendet, ist es ergänzend möglich, die Herstellung des dreidimensionalen Gegenstandes 13 mittels mindestens einer Austrageinheit 2 im Bauraum 14 und das Austragen des fluiden verfestigbaren Materials mittels mindestens einer Austragseinheit 2 in der Spülstellung durchzuführen.

Dazu wird eine Austragseinheit 2, die zur Reinigung ansteht, aus dem Herstellungsprozess, also z.B. aus dem Bauraum entnommen, während eine andere Austragseinheit 2 mit dem Herstellungsprozess fortfährt. Die entnommene Austragseinheit 2 wird entsprechend den obenstehenden Ausführungen gespült bzw. gereinigt und anschließend wieder in den Bauraum 14 eingebracht. Auf diese Weise können nacheinander alle Austragseinheiten 2 der Vorrichtung 1 gespült werden, wodurch kein Zeitverlust durch eine sequentielle Aufeinanderfolge von Herstellungsprozess und Spülvorgang eintritt, wie es aus dem Stand der Technik bekannt ist.

Vorteilhafterweise kann beim Trennen der Austragsdüse 12 der Austragseinheit 2 von der Öffnung 11 des Verschlussbauteils 10 des Entsorgungsbehälters 6 gleichzeitig ein verbliebener Materialaustrag an der Austragsdüse 12 abgestreift werden, was zusätzlich die Lebensdauer der Austragsdüse 12 erhöht und die materialspezifischen Eigenschaften des im Bauraum ausgetragenen Materials verbessert.

Weiterhin kann bei Verwendung eines Verschlussbauteils 10 mit mehreren Öffnungen 11 ein mehrfacher Austrag von fluidem verfestigbarem Material in den Entsorgungsbehälter 6 durchgeführt werden, wodurch eine effiziente und kostengünstige mehrfache Nutzung der Entsorgungsbehälter gewährleistet ist.

## Patentansprüche

1. Spülstation mit mindestens einer bewegbaren Austragseinheit (2) für eine Vorrichtung (1) zur Herstellung eines dreidimensionalen Gegenstandes (13) aus verfestigbarem Material in einem Bauraum (14), das in einer Arbeitsstellung aus einer Austragsdüse (12) der Austragseinheit (2) austragbar ist,
wobei fluides verfestigbares Material in einer Spülstellung aus der Austragseinheit (2) in einem Spülvorgang austragbar ist und
wobei die Spülstation das Folgende umfasst:
- einen in die Vorrichtung (1) integrierbaren ersten Bewegungsmechanismus, ausgebildet zur Überführung der Austragseinheit (2) in die Spülstellung,
- einen in der Vorrichtung (1) bewegbaren Entsorgungsbehälter (6) und ein damit verbindbares Verschlussbauteil (10),
- einen in die Vorrichtung (1) integrierbaren zweiten Bewegungsmechanismus, ausgebildet zur Verbindung des Entsorgungsbehälters (6) mit dem Verschlussbauteil (10) mit mindestens einer Öffnung (11) und zur anschließenden Anlage der Austragsdüse (12) an der Öffnung (11) des Verschlussbauteils (10), und
- eine mit einer Steuerung der Vorrichtung (1) kommunizierende und von der Steuerung der Vorrichtung (1) separate und oder in diese integrierbare Steuerung, ausgebildet zur Steuerung der Überführung der Austragseinheit (2) in die Spülstellung mittels des ersten Bewegungsmechanismus, zur Verbindung des Verschlussbauteils (10) mit der mindestens einen Öffnung (11) mit dem Entsorgungsbehälter (6) und zur anschließenden Anlage der Austragsdüse (12) an der Öffnung (11) des Verschlussbauteils (10) mittels des zweiten Bewegungsmechanismus, zum Austragen von fluidem verfestigbarem Material, zur Trennung der Austragsdüse (12) von der Öffnung (11) des Verschlussbauteils (10) des Entsorgungsbehälters (6) und zur Überführung der Austragseinheit (2) in die Arbeitsstellung,
**dadurch gekennzeichnet, dass** beim Austragen von fluidem verfestigbarem Material die Verbindung des Verschlussbauteils (10) mit dem Entsorgungsbehälter (6) und die Anlage der Austragsdüse (12) an der Öffnung (11) des Verschlussbauteils (10) ausgebildet sind, im Entsorgungsbehälter (6) einen thermisch optimierten Zustand oder einen durch einen Druck erreichten Zustand zu erzeugen, der ein Volumen des ausgetragenen fluiden verfestigbaren Material mindert, und
dass die Austragsdüse (12) und die Öffnung (11) des Verschlussbauteils (10) eine aufeinander abgestimmte Geometrie der Austragsdüse (12) und der Öffnung (11) aufweisen, die ausgebildet ist, Anhaftungen von ausgetragenem Material an der Austragsdüse (12) zu reduzieren und eine weitestgehend fadenfreie Trennung der Austragsdüse (12) von dem Verschlussbauteil (10) zu ermöglichen.

2. Spülstation nach Anspruch 1, **dadurch gekennzeichnet, dass** bei Verwendung mehrerer Austragseinheiten (2) die Steuerung ausgebildet ist, gleichzeitig die Herstellung des dreidimensionalen Gegenstandes mittels mindestens einer Austrageinheit (2) im Bauraum (14) und das Austragen des fluiden verfestigbaren Materials mittels mindestens einer Austragseinheit (2) in den Entsorgungsbehälter (6) zu ermöglichen.

3. Spülstation nach Anspruch 1 oder 2, **dadurch gekennzeichnet, dass** bei der Trennung der Austragsdüse (12) von der Öffnung (11) des Verschlussbauteils (10) des Entsorgungsbehälters (6) die Spülstation dazu eingerichtet ist, gleichzeitig verbliebenen Materialaustrag am Entsorgungsbehälter abzutrennen.

4. Spülstation nach einem der vorhergehenden Ansprüche, **dadurch gekennzeichnet, dass** der erste Bewegungsmechanismus ausgebildet ist zur Entnahme der Austragseinheit (2) aus dem Bauraum (14) und nach dem Austragen des fluiden verfestigbaren Materials außerhalb des Bauraums (14) zur Einbringung der Austragseinheit (2) in den Bauraum (14).

5. Spülstation nach einem der vorhergehenden Ansprüche, **dadurch gekennzeichnet, dass** das Verschlussbauteil (10) mehrere Öffnungen (11) aufweist und dazu ausgebildet ist, einen mehrfachen Austrag von fluidem verfestigbarem Material in den Entsorgungsbehälter (6) zu ermöglichen.

6. Spülstation nach einem der vorhergehenden Ansprüche, **dadurch gekennzeichnet, dass** mehrere Entsorgungsbehälter (6) in einem in die Vorrichtung integrierbarem Behältermagazin (4) bevorratet sind.

7. Spülstation nach Anspruch 6, **dadurch gekennzeichnet, dass** mittels einer in die Vorrichtung (1) integrierbaren Vereinzelungseinheit die Entsorgungsbehälter (6) vereinzelbar und an eine Entsorgungsbehälteraufnahme (9) übergebbar sind, die mit einem, an einem in die Vorrichtung (1) integrierbaren Schwenk- und Linearbewegungsmechanismus (8) angeordneten, Tragarm (5) verbunden ist, wobei der zweite Bewegungsmechanismus den Schwenk- und Linearbewegungsmechanismus (8) umfasst.

8. Spülstation nach Anspruch 7, **dadurch gekennzeichnet, dass** das Verschlussbauteil (10) in die Entsorgungsbehälteraufnahme (9) integriert ist.

9. Spülstation nach Anspruch 7, **dadurch gekennzeichnet, dass** der erste Bewegungsmechanismus einen Abhebemechanismus (7) umfasst, der einen Freiraum unter der Austragsdüse (12) bildet, der es erlaubt, mit dem Schwenk- und Linearbewegungsmechanismus (8) den Entsorgungsbehälter (6) in verschiedenen, der Anzahl der Öffnungen (11) des Verschlussbauteils (10) entsprechenden, Stellungen unter der Austragsdüse (12) zu platzieren.

10. Spülstation nach einem der Ansprüche 7 bis 9, **dadurch gekennzeichnet, dass** der Schwenk- und Linearbewegungsmechanismus (8) an einem schwenkbaren Verkleidungsdeckel (3) der Vorrichtung (1) anordenbar ist.

11. Verfahren zum Spülen mindestens einer bewegbaren Austragseinheit (2) für eine Vorrichtung (1) zur Herstellung eines dreidimensionalen Gegenstandes (13) aus verfestigbarem Material in einem Bauraum (14), das in einer Arbeitsstellung aus einer Austragsdüse (12) der Austragseinheit (2) ausgetragen wird,
wobei fluides verfestigbares Material in einer Spülstellung aus der Austragseinheit (2) in einem Spülvorgang ausgetragen wird, unter Verwendung einer Spülstation entsprechend einem der vorhergehenden Ansprüche,
wobei es die folgenden Schritte umfasst:
- Überführen der Austragseinheit (2) in die Spülstellung,
- Verbinden eines Entsorgungsbehälters (6) mit einem Verschlussbauteil (10) mit mindestens einer Öffnung (11),
- Anlegen der Austragsdüse (12) an der Öffnung (11) des Verschlussbauteils (10),
- Austragen von fluidem verfestigbarem Material aus der Austragseinheit (2),
- Trennen der Austragsdüse (12) der Austragseinheit (2) von der Öffnung (11) des Verschlussbauteils (10) des Entsorgungsbehälters (6), und
- Überführen der Austragseinheit (2) in die Arbeitsstellung,
wobei die Schritte in der genannten Reihenfolge ausgeführt werden,
wobei beim Austragen von fluidem verfestigbarem Material durch die Verbindung der Austragsdüse (12) mit der Öffnung (11) des Verschlussbauteils (10) ein thermisch optimierter Zustand oder ein durch einen Druck erreichter Zustand im Entsorgungsbehälter (6) verursacht wird, wodurch ein Volumen des ausgetragenen fluiden verfestigbaren Materials gemindert wird, und
wobei beim Trennen eine aufeinander abgestimmte Geometrie der Austragsdüse (12) der Austragseinheit (2) und der Öffnung (11) des Verschlussbauteils (10) Anhaftungen von ausgetragenem Material an der Austragsdüse (12) reduziert und die Austragdüse (12) vom Verschlussbauteil (10) weitestgehend fadenfrei trennt.

12. Verfahren nach Anspruch 11, **dadurch gekennzeichnet, dass** bei Verwendung mehrerer Austragseinheiten (2) gleichzeitig die Herstellung des dreidimensionalen Gegenstandes mittels mindestens einer Austrageinheit (2) im Bauraum (14) und das Austragen des fluiden verfestigbaren Materials mittels mindestens einer Austragseinheit (2) in der Spülstellung durchgeführt wird.

13. Verfahren nach Anspruch 11 oder 12, **dadurch gekennzeichnet, dass** beim Trennen der Austragsdüse (12) der Austragseinheit (2) von der Öffnung (11) des Verschlussbauteils (10) des Entsorgungsbehälters (6) gleichzeitig ein verbliebener Materialaustrag an der Austragsdüse (12) abgestreift wird.

14. Verfahren nach einem der Ansprüche 11 bis 13, **dadurch gekennzeichnet, dass** bei Verwendung eines Verschlussbauteils (10) mit mehreren Öffnungen (11) ein mehrfacher Austrag von fluidem verfestigbarem Material in den Entsorgungsbehälter (6) durchgeführt wird.

## Claims

1. Rinsing station with at least one movable discharge unit (2) for a device (1) for producing a three-dimensional object (13) from solidifiable material in a construction space (14), wherein the solidifiable material is dischargable from a discharge nozzle (12) of the discharge unit (2) in a working position,
wherein fluid solidifiable material is dischargable from the discharge unit (2) in a rinsing position in a rinsing process, and
wherein the rinsing station comprises the following:
- a first movement mechanism that is integrable into the device (1), configured for transferring the discharge unit (2) into the rinsing position,
- a disposal container (6) movable in the device (1) and a closure component (10) connectable thereto ,
- a second movement mechanism which is integrable into the device (1) and is configured for connecting the disposal container (6) to the closure component (10) with at least one opening (11) and for subsequently applying the discharge nozzle (12) to the opening (11) of the closure component (10), and
- a control communicating with a control of the device (1) and separate from the control of the device (1) and or integrable therein, configured for controlling the transfer of the discharge unit (2) into the rinsing position by means of the first movement mechanism, for connecting the closure component (10) comprising the at least one opening (11) to the disposal container (6) and for the subsequently applying the discharge nozzle (12) to the opening (11) of the closure component (10) by means of the second movement mechanism, for discharging fluid solidifiable material, for separating the discharge nozzle (12) from the opening (11) of the closure component (10) of the disposal container (6) and for transferring the discharge unit (2) into the working position,
**characterised in that**, when fluid solidifiable material is discharged, the connection of the closure component (10) to the disposal container (6) and the application of the discharge nozzle (12) to the opening (11) of the closure component (10) are configured to produce a thermally optimised state in the disposal container (6) or a state achieved by a pressure which reduces a volume of the discharged fluid solidifiable material, and
**in that** the discharge nozzle (12) and the opening (11) of the closure component (10) have a mutually adapted geometry of the discharge nozzle (12) and the opening (11), which is configured to reduce adhesions of discharged material to the discharge nozzle (12) and to enable a largely thread-free separation of the discharge nozzle (12) from the closure component (10) .

2. Rinsing station according to claim 1, **characterised in that**, when using several discharge units (2), the control system is configured to simultaneously enable the production of the three-dimensional object by means of at least one discharge unit (2) in the construction space (14) and the discharge of the fluid solidifiable material by means of at least one discharge unit (2) into the disposal container (6).

3. Rinsing station according to claim 1 or 2, **characterised in that** when the discharge nozzle (12) is separated from the opening (11) of the closure component (10) of the disposal container (6), the rinsing station is configured to simultaneously separate any remaining material discharge from the disposal container .

4. Rinsing station according to one of the preceding claims, **characterised in that** the first movement mechanism is configured to remove the discharge unit (2) from the construction space (14) and, after the fluid solidifiable material has been discharged outside the construction space (14), to insert the discharge unit (2) into the construction space (14).

5. Rinsing station according to one of the preceding claims , **characterised in that** the closure component (10) has a plurality of openings (11) and is configured to enable multiple discharge of fluid solidifiable material into the disposal container (6).

6. Rinsing station according to one of the preceding claims, **characterised in that** a plurality of disposal containers (6) are stored in a container magazine (4) which is be integrable into the device.

7. Rinsing station according to claim 6, **characterised in that** the disposal containers (6) can be separated by means of a separating unit which is integrable into the device (1) and are transferable to a disposal container receiver (9) which is connected to a support arm (5) arranged on a pivoting and linear movement mechanism (8) which is integrable into the device (1), wherein the second movement mechanism comprises the pivoting and linear movement mechanism (8).

8. Rinsing station according to claim 7, **characterised in that** the closure component (10) is integrated into the disposal container receiver (9).

9. Rinsing station according to claim 7, **characterised in that** the first movement mechanism comprises a lifting mechanism (7) which forms a free space under the discharge nozzle (12), which allows the disposal container (6) to be placed under the discharge nozzle (12) in various positions corresponding to the number of openings (11) of the closure component (10) by means of the pivoting and linear movement mechanism (8).

10. Rinsing station according to one of the claims 7 to 9, **characterised in that** the pivoting and linear movement mechanism (8) can be arranged on a pivotable cladding cover (3) of the device (1).

11. Method for rinsing at least one movable discharge unit (2) for a device (1) for producing a three-dimensional object (13) from solidifiable material in a construction space (14), which is discharged from a discharge nozzle (12) of the discharge unit (2) in a working position,
wherein fluid solidifiable material is discharged in a rinsing position from the discharge unit (2) in a rinsing process, using a rinsing station according to one of the preceding claims,
comprising the following steps:
- transferring the discharge unit (2) to the rinsing position,
- connecting a disposal container (6) to a closure component (10) comprising at least one opening (11),
- applying the discharge nozzle (12) to the opening (11) of the closure component (10),
- discharging fluid solidifiable material from the discharge unit (2),
- separating the discharge nozzle (12) of the discharge unit (2) from the opening (11) of the closure component (10) of the disposal container (6), and
- transferring the discharge unit (2) to the working position,
wherein the steps are carried out in the order mentioned,
wherein, when fluid solidifiable material is discharged, a thermally optimised state or a state achieved by a pressure is caused in the disposal container (6) by the connection of the discharge nozzle (12) to the opening (11) of the closure component (10), whereby a volume of the discharged fluid solidifiable material is reduced, and
wherein during separation, a mutually adapted geometry of the discharge nozzle (12) of the discharge unit (2) and the opening (11) of the closure component (10) reduces adhesions of discharged material to the discharge nozzle (12) and separates the discharge nozzle (12) from the closure component (10) largely free of threads.

12. Method according to claim 11, **characterised in that**, when using several discharge units (2), the production of the three-dimensional object is carried out simultaneously by means of at least one discharge unit (2) in the construction space (14) and the discharge of the fluid solidifiable material is carried out by means of at least one discharge unit (2) in the rinsing position.

13. Method according to claim 11 or 12, **characterised in that** when separating the discharge nozzle (12) of the discharge unit (2) from the opening (11) of the closure component (10) of the disposal container (6) a remaining material discharge is simultaneously stripped off at the discharge nozzle (12) .

14. Method according to one of claims 11 to 13, **characterised in that** when using a closure component (10) with several openings (11), a multiple discharge of fluid solidifiable material into the disposal container (6) is carried out.

## Revendications

1. Station de rinçage comportant au moins une unité de pulvérisation mobile (2) pour un dispositif (1) pour la fabrication d'un objet tridimensionnel (13) en matériau durcissable dans un espace de fabrication (14), qui peut être appliqué dans une position de travail à partir d'une buse de pulvérisation (12) de l'unité de pulvérisation (2),
dans laquelle un matériau fluide durcissable est pulvérisé dans une position de rinçage à partir de l'unité de pulvérisation (2) au cours d'une opération de rinçage et
dans lequel la station de pulvérisation comprend ce qui suit :
- un premier mécanisme de déplacement pouvant être intégré dans le dispositif (1), prévu pour faire passer l'unité de pulvérisation (2) dans la position de rinçage,
- un récipient d'élimination (6) mobile dans le dispositif (1) et une pièce de fermeture (10) pouvant être reliée à ce récipient d'élimination (6),
- un deuxième mécanisme de déplacement pouvant être intégré dans le dispositif (1), prévu pour relier le récipient d'élimination (6) à la pièce de fermeture (10) ayant au moins une ouverture (11) et pour mettre ensuite la buse de pulvérisation (12) au niveau de l'ouverture (11) de la pièce de fermeture (10), et
- un dispositif de commande communiquant avec un dispositif de commande du dispositif (1) et séparé du dispositif de commande du dispositif (1) ou pouvant être intégré dans ce dispositif, prévu pour la commande du passage de l'unité de pulvérisation (2) dans la position de rinçage au moyen du premier mécanisme de déplacement, pour relier la pièce de fermeture (10) ayant au moins un ouverture (11) au récipient d'élimination (6) et pour mettre ensuite la buse de pulvérisation (12) au niveau de l'ouverture (11) de la pièce de fermeture (10) au moyen du deuxième mécanisme de déplacement, pour la pulvérisation du matériau fluide durcissable, pour éloigner la buse d'application (12) de l'ouverture (11) de la pièce de fermeture (10) du récipient d'élimination (6) et pour faire passer l'unité de pulvérisation (2) dans la position de travail,
**caractérisée en ce que**, lors de la pulvérisation du matériau fluide durcissable, la liaison de la pièce de fermeture (10) au récipient d'élimination (6) et la mise de la buse de pulvérisation (12) au niveau de l'ouverture (11) de la pièce de fermeture (10) sont prévues pour créer dans le récipient d'élimination (6) un état thermique optimisé ou un état atteint sous pression qui diminue le volume du matériau fluide durcissable pulvérisé, et
**en ce que** la buse de pulvérisation (12) et l'ouverture (11) de la pièce de fermeture (10) présentent une géométrie correspondante de la buse de pulvérisation (12) et de l'ouverture (11) qui est prévue pour réduire l'adhérence du matériau pulvérisé à la buse de pulvérisation (12) et permettre un éloignement pratiquement sans fil de la buse de pulvérisation (12) de la pièce de fermeture (10).

2. Station de rinçage selon la revendication 1, **caractérisée en ce que** lors de l'utilisation de plusieurs unités de pulvérisation (2), le dispositif de commande est prévue pour permettre de fabriquer simultanément l'objet tridimensionnel au moyen d'au moins une unité de pulvérisation (2) dans l'espace de fabrication (14) et pour pulvériser le matériau fluide durcissable au moyen d'au moins une unité de pulvérisation (2) dans le récipient d'élimination (6).

3. Station de rinçage selon la revendication 1 ou 2, **caractérisée en ce que** lors de l'éloignement de la buse de pulvérisation (12) de l'ouverture (11) de la pièce de fermeture (10) du récipient d'élimination (6), la station de rinçage est configurée pour éloigner en même temps du matériau de pulvérisation restant au niveau du récipient d'élimination.

4. Station de rinçage selon l'une des revendications précédentes, **caractérisée en ce que** le premier mécanisme de déplacement est prévu pour le retrait de l'unité de pulvérisation (2) de l'espace de fabrication (14) et, après la pulvérisation du matériau fluide durcissable hors de l'espace de fabrication (14), pour l'introduction de l'unité de pulvérisation (2) dans l'espace de fabrication (14).

5. Station de rinçage selon l'une des revendications précédentes, **caractérisée en ce que** la pièce de fermeture (10) présente plusieurs ouvertures (11) et est prévue pour permettre une pulvérisation multiple de matériau fluide durcissable dans le récipient d'élimination (6).

6. Station de rinçage selon l'une des revendications précédentes, **caractérisée en ce que** plusieurs récipients d'élimination (6) sont stockés dans un magasin de récipients (4) pouvant être intégré dans le dispositif.

7. Station de rinçage selon la revendication 6, **caractérisée en ce que** les récipients d'élimination (6) peuvent être séparés au moyen d'une unité de séparation pouvant être intégrée dans le dispositif (1) et peuvent être transmis à un dispositif de saisie de récipients d'élimination (9) qui est relié à un bras porteur disposé au niveau d'un mécanisme de pivotement et de déplacement linéaire (8) pouvant être intégré dans le dispositif (1), le deuxième mécanisme de déplacement comprenant le mécanisme de pivotement et de déplacement linéaire (8).

8. Station de rinçage selon la revendication 7, **caractérisée en ce que** la pièce de fermeture (10) est intégrée dans le dispositif de saisie de récipients d'élimination (9).

9. Station de rinçage selon la revendication 7, **caractérisée en ce que** le premier mécanisme de déplacement comprend un mécanisme de levage (7), qui forme un espace libre sous la buse de pulvérisation (12), lequel permet de placer le récipient d'élimination (6) avec le mécanisme de pivotement et de déplacement linéaire (8) dans différentes positions correspondant au nombre d'ouvertures (11) de la pièce de fermeture (10), sous la buse de pulvérisation (12).

10. Station de rinçage selon l'une des revendications 7 à 9, **caractérisée en ce que** le mécanisme de pivotement et de déplacement linéaire (8) peut être disposé au niveau d'un couvercle de revêtement (3) du dispositif (1) pouvant pivoter.

11. Procédé de rinçage d'au moins une unité de pulvérisation mobile (2) pour un dispositif (1) pour la fabrication d'un objet tridimensionnel (13) en matériau durcissable dans un espace de fabrication (14), lequel est pulvérisé dans une position de travail à partir d'une buse de pulvérisation (12) de l'unité de pulvérisation (2),
dans lequel du matériau fluide durcissable est pulvérisé dans une position de pulvérisation à partir de l'unité de pulvérisation (2) au cours d'une opération de rinçage, en utilisant une station de rinçage correspondant à l'une des revendications précédentes, comprenant les étapes suivantes consistant à :
- mettre l'unité de pulvérisation (2) dans la station de rinçage,
- relier un récipient d'élimination (6) ayant une pièce de fermeture (10) ayant au moins une ouverture (11),
- disposer la buse de pulvérisation (12) au niveau de l'ouverture (11) de la pièce de fermeture (10),
- pulvériser le matériau fluide durcissable à partir de l'unité de pulvérisation (2),
- éloigner la buse de pulvérisation (12) de l'unité de pulvérisation (2) de l'ouverture (11) de la pièce de fermeture (10) du récipient d'élimination (6), et
- faire passer l'unité de pulvérisation (2) dans la position de travail,
dans lequel les étapes sont mises en oeuvre dans l'ordre précité,
dans lequel, lors de la pulvérisation du matériau fluide durcissable en reliant la buse de pulvérisation (12) avec l'ouverture (11) de la pièce de fermeture (10), un état thermique optimisé ou un état atteint au moyen d'une pression dans le récipient d'élimination (6) est créé, grâce à quoi le volume du matériau fluide durcissable pulvérisé est réduit, et
dans lequel, lors de l'éloignement, une géométrie correspondante de la buse de pulvérisation (12) de l'unité de pulvérisation (2) et de l'ouverture (11) de la pièce de fermeture (10) réduit l'adhérence du matériau pulvérisé au niveau de la buse de pulvérisation (12) et éloigne la buse de pulvérisation (12) de la pièce de fermeture (10) pratiquement sans fil.

12. Procédé selon la revendication 11, **caractérisé en ce que**, lors de l'utilisation de plusieurs unités de pulvérisation (2) en même temps, la fabrication de l'objet tridimensionnel est réalisée au moyen d'au moins une unité de pulvérisation (2) dans l'espace de fabrication (14) et la pulvérisation du matériau fluide durcissable au moyen d'au moins une unité de pulvérisation (2) dans la position de rinçage.

13. Procédé selon la revendication 11 ou 12, **caractérisé en ce que** lors de l'éloignement de la buse de pulvérisation (12) de l'unité de pulvérisation (2) de l'ouverture (11) de la pièce de fermeture (10) du récipient d'élimination (6), en même temps, le matériau de pulvérisation restant au niveau de la buse de pulvérisation (12) est raclé.

14. Procédé selon l'une des revendications 11 à 13, **caractérisé en ce que** lors de l'utilisation d'une pièce de fermeture (10) ayant plusieurs ouvertures (11), une pulvérisation multiple du matériau fluide durcissable est réalisée dans le récipient d'élimination (6).
